# EUROPÄISCHE PATENTANMELDUNG

(11) **EP 4 239 545 A1**
(43) Veröffentlichungstag der Anmeldung: **06.09.2023**
(21) Anmeldenummer: 23153493.4
(22) Anmeldetag: 26.01.2023
(51) Int. Cl.: G06Q 10/063, G06Q 50/02, A01B 59/00, A01B 76/00

(54) **VERFAHREN ZUR VERSORGUNG EINES ENERGIESPEICHERS EINER UNBEMANNTEN LANDWIRTSCHAFTLICHEN ARBEITSMASCHINE**

(30) Priorität: 01.03.2022 DE 102022104820
(71) Anmelder: CLAAS Tractor S.A.S., 78141 Vélizy-Villacoublay Cedex (FR)
(72) Erfinder: WIECKHORST, Jan Carsten, 29525 Uelzen Orsteil Hanstedt 2 (DE); PUNDT, Michael, 33428 Harsewinkel (DE); NACKE, Eberhard, 33332 Gütersloh (DE)
(74) Vertreter: CLAAS Gruppe

(57) **Zusammenfassung**

Die vorliegende Erfindung betrifft ein Verfahren zur Versorgung eines Energiespeichers einer unbemannten landwirtschaftlichen Arbeitsmaschine (1) mittels eines bemannten Fahrzeugs (2). Das Verfahren umfasst eine Transportphase, während der die unbemannte landwirtschaftliche Arbeitsmaschine (1) mittels des bemannten Fahrzeugs (2) von einem Ausgangsort zu einer zu bearbeitenden landwirtschaftlichen Fläche oder von der landwirtschaftlichen Fläche zu einem Zielort überführt wird und/oder eine Arbeitsphase, während der sich sowohl die unbemannte landwirtschaftliche Arbeitsmaschine (1) als auch das bemannte Fahrzeug (2) an dem Ausgangsort, der landwirtschaftlichen Fläche oder dem Zielort befinden und zumindest die unbemannte landwirtschaftliche Arbeitsmaschine (1) dort zumindest zeitweise einen Arbeitseinsatz ausführt. Das Verfahren ist dadurch gekennzeichnet, dass die unbemannte landwirtschaftliche Arbeitsmaschine (1) zumindest zeitweise während der Transportphase und/oder der Arbeitsphase mit dem bemannten Fahrzeug (2) physisch verbunden ist und zwar derart, dass der Energiespeicher der unbemannten landwirtschaftlichen Arbeitsmaschine (1) von dem bemannten Fahrzeug (2) zumindest zeitweise mittelbar und/oder unmittelbar mit Energie versorgt wird.

## Beschreibung

Die vorliegende Anmeldung betrifft ein Verfahren zur Versorgung eines Energiespeichers einer unbemannten landwirtschaftlichen Arbeitsmaschine mittels eines bemannten Fahrzeugs gemäß dem Oberbegriff des unabhängigen Patentanspruchs 1 sowie eine Kombination, insbesondere ein Gespann, aus einer unbemannten landwirtschaftlichen Arbeitsmaschine und einem bemannten Fahrzeug gemäß dem unabhängigen Patentanspruch 15.

Sich stetig ändernde globale Rahmenbedingungen führen dazu, dass auch die Landwirtschaft sich fortwährend neuen Herausforderungen ausgesetzt sieht. Um diesen Herausforderungen begegnen zu können, müssen bestehende landwirtschaftliche Strukturen und Prozessabläufe wandlungsfähig sein.

Für einen Landwirt ist es dabei wesentlich, dass stets ein wirtschaftlicher Betrieb erzielt werden kann. Dieser Zielsetzung zumindest bedingt entgegenstehend ist eine schonende und nachhaltige Nutzung der zur Verfügung stehenden Ressourcen sowie die Einhaltung von ökologischen Vorgaben, die aus verschiedensten Gesetzgebungen resultieren. Ein Ansatz, um diese Zielsetzungen optimal miteinander in Einklang zu bringen, somit einen für den Landwirt effizienten Betrieb zu erzielen, ist darin zusehen, den Automatisierungsgrad der landwirtschaftlichen Arbeitsmaschinen zu steigern.

So werden beispielsweise Spurführungssysteme bei landwirtschaftlichen Arbeitsmaschinen eingesetzt, um vorgeplante Routen bei der Bearbeitung einer landwirtschaftlichen Fläche präzise und automatisiert abzufahren ohne, dass ein Bediener hierbei wesentlichen Einfluss nehmen muss.

Um den Automatisierungsgrad von landwirtschaftlichen Arbeitsmaschinen weiter zu erhöhen, werden derzeit vermehrt Bestrebungen dahingehend unternommen teil- oder vollautonom arbeitende landwirtschaftliche Arbeitsmaschinen bei der Abarbeitung von Arbeitseinsätzen in der Landwirtschaft zu nutzen. Solche autonom arbeitenden landwirtschaftlichen Arbeitsmaschinen zeichnen sich dadurch aus, dass kein Bediener zur Steuerung der landwirtschaftlichen Arbeitsmaschine vorhanden ist und werden daher auch als unbemannte landwirtschaftliche Arbeitsmaschinen bezeichnet. Derartige unbemannte landwirtschaftliche Arbeitsmaschinen können zu erledigende Arbeitseinsätze teilweise oder vollständig übernehmen, wobei eine Führung der unbemannten Arbeitsmaschine während der Abarbeitung des Arbeitseinsatzes ohne aktiven Eingriff einer Person erfolgen kann. Die unbemannte landwirtschaftliche Maschine kann sich beispielsweise entlang einer Fahrspur einer bemannten landwirtschaftlichen Arbeitsmaschine orientieren oder aber anhand von GPS-Daten selbsttätig ihre Fahrspur ermitteln.

So ist beispielsweise aus der WO 2015/173073 A1 ein Verfahren zum Ernten von Erntegut bekannt, wobei ein bemanntes und ein unbemanntes Fahrzeug eingesetzt werden. Der Betrieb und die Bewegung des unbemannten Fahrzeugs werden durch einen Fahrer des bemannten Fahrzeugs gesteuert, der sich kontinuierlich in der Nähe des unbemannten Fahrzeugs aufhält. Das unbemannte Fahrzeug wird insbesondere dazu verwendet, das von dem bemannten Fahrzeug geerntete Erntegut zu einem Ladewagen zu transportieren, wobei der Transport des Ernteguts durch das unbemannte Fahrzeug von dem Fahrer gesteuert wird, der sich stets in Sichtweite des unbemannten Fahrzeugs aufhält (sogenannte "crop carts").

Eine wesentliche Fragestellung im Kontext der Autonomie von landwirtschaftlichen Arbeitsmaschinen ist die des Transports. Aufgrund von bestehenden gesetzlichen Rahmenbedingungen ist der Transport einer unbemannten landwirtschaftlichen Arbeitsmaschine von einem landwirtschaftlichen Betrieb zu einer zu bearbeitenden landwirtschaftlichen Fläche und/oder von einer landwirtschaftlichen Fläche zu einer anderen landwirtschaftlichen Fläche aufgrund der Nutzung von Straßen und Wirtschaftswegen derzeit noch nicht losgelöst von bemannten Fahrzeugen möglich. Die WO 2020/106142 A1 schlägt beispielsweise vor eine autonome/unbemannte landwirtschaftliche Arbeitsmaschine mittels einer Deichsel an eine bemannte landwirtschaftliche Arbeitsmaschine zu koppeln. Damit gesetzliche Bestimmungen zur zulässigen Breite nicht überschritten werden, verfügt die unbemannte landwirtschaftliche Arbeitsmaschine über zusätzliche quer zur Längsrichtung der Arbeitsmaschine angebrachte Reifen, sodass die unbemannte landwirtschaftliche Arbeitsmaschine während ihres Transports mittels der bemannten landwirtschaftlichen Arbeitsmaschine quer zu ihrer Längsrichtung ausgerichtet werden kann.

Weiterhin wird der Einsatz von fossilen Kraftstoffen zum Antrieb von landwirtschaftlichen Arbeitsmaschinen zunehmend infrage gestellt. Insbesondere im Kontext der Autonomie wird daher die Verwendung von elektrischen Antriebe für unbemannte landwirtschaftliche Arbeitsmaschinen angestrebt. Die erforderliche Steigerung des Automatisierungsgrads berücksichtigend, ist die Zielsetzung dahingehend zu definieren, nicht nur einen geringen Teil an Arbeitseinsätzen während eines Arbeitstages, sondern nach Möglichkeit die geplanten Arbeitseinsätze eines gesamten Arbeitstages, zumindest jedoch einen Großteil der Arbeitseinsätze eines gesamten Arbeitstages, von einer unbemannten landwirtschaftlichen Arbeitsmaschine abarbeiten zu lassen. Hierzu müssen entweder die Energiespeicher von unbemannten landwirtschaftlichen Arbeitsmaschinen derart ausgebildet sein, dass sie eine Menge an Energie speichern können, die für die Abarbeitung der Arbeitseinsätze eines gesamten Arbeitsages ausreicht oder aber es muss die Möglichkeit geschaffen werden die unbemannte landwirtschaftliche Arbeitsmaschine während eines Arbeitstages laden zu können. Ersteres wird aufgrund der hohen Leistungsbedarfe von landwirtschaftlichen Arbeitsmaschinen kurzfristig nicht zu realisieren sein. Es wird daher notwendig sein, die unbemannte landwirtschaftliche Arbeitsmaschine während eines Arbeitstages laden zu können.

Die derzeitige Infrastruktur erlaubt ein Laden einer unbemannten landwirtschaftlichen Arbeitsmaschine derzeit noch nicht flächendeckend. So verfügt beispielsweise nicht jeder landwirtschaftliche Betrieb über Ladesäulen, die ein wirtschaftliches Laden eines Energiespeichers einer unbemannten landwirtschaftlichen Arbeitsmaschine erlauben. Weiterhin sind derzeit Ladesäulen im Bereich der zu bearbeitenden landwirtschaftlichen Flächen, die ein Laden während eines Arbeitseinsatzes erlauben, nicht oder nur selten zu finden.

Ausgehend hiervon ist es demnach die Aufgabe der vorliegenden Erfindung ein Verfahren anzugeben, dass eine Versorgung eines Energiespeichers einer unbemannten landwirtschaftlichen Arbeitsmaschine mit Energie erlaubt und zwar unabhängig von einer vorhandenen Ladeinfrastruktur, so dass eine möglichst große Anzahl an Arbeitseinsätzen in einer Abfolge von zusammenhängenden Arbeitseinsätzen, insbesondere die an einem Arbeitstag geplanten Arbeitseinsätze, von der unbemannten landwirtschaftlichen Arbeitsmaschine ausgeführt werden können.

Diese Aufgabe wird erfindungsgemäß durch die Merkmale des unabhängigen Patentanspruchs 1 gelöst, wobei vorteilhafte Weiterbildungen des erfindungsgemäßen Verfahrens Gegenstand der entsprechenden abhängigen Patentansprüche 2 bis 14 sind.

Demnach betrifft die vorliegende Erfindung ein Verfahren zur Versorgung eines Energiespeichers einer unbemannten landwirtschaftlichen Arbeitsmaschine mittels eines bemannten Fahrzeugs. Das Verfahren umfasst eine Transportphase, während der die unbemannte landwirtschaftliche Arbeitsmaschine mittels des bemannten Fahrzeugs von einem Ausgangsort zu einer zu bearbeitenden landwirtschaftlichen Fläche oder von der landwirtschaftlichen Fläche zu einem Zielort überführt wird. Ergänzend oder alternativ hierzu umfasst das Verfahren eine Arbeitsphase, während der sich sowohl die unbemannte landwirtschaftliche Arbeitsmaschine als auch das bemannte Fahrzeug an dem Ausgangsort, der landwirtschaftlichen Fläche oder dem Zielort befinden und zumindest die unbemannte landwirtschaftliche Arbeitsmaschine dort zumindest zeitweise einen Arbeitseinsatz ausführt. Das Verfahren ist dadurch gekennzeichnet, dass die unbemannte landwirtschaftliche Arbeitsmaschine zumindest zeitweise während der Transportphase und/oder der Arbeitsphase mit dem bemannten Fahrzeug physisch verbunden ist und zwar derart, dass der Energiespeicher der unbemannten landwirtschaftlichen Arbeitsmaschine von dem bemannten Fahrzeug zumindest zeitweise mittelbar und/oder unmittelbar mit Energie versorgt wird.

Die Versorgung des Energiespeichers der unbemannten landwirtschaftlichen Arbeitsmaschine mittels des bemannten Fahrzeugs während der Transportphase und/oder während der Arbeitsphase ermöglicht ein Laden der unbemannten landwirtschaftlichen Arbeitsmaschine ohne, dass hierfür eine entsprechende Ladeinfrastruktur notwendig ist. Vielmehr wird das für den Transport und/oder das am Arbeitsort vorhandene bemannte Fahrzeug dazu genutzt, die unbemannte landwirtschaftliche Arbeitsmaschine im Betrieb und/oder außerhalb ihres Betriebs zu laden. Hierdurch kann die mögliche Einsatzdauer der unbemannten landwirtschaftlichen Arbeitsmaschine in erheblichem Maße gesteigert werden, da die Einsatzzeit nicht durch eine einmalige vollständige Ladung des Energiespeichers beschränkt wird. Vielmehr kann diese immer wieder durch das bemannte Fahrzeug geladen werden, so dass ein Abarbeiten aller Arbeitseinsätze während eines Arbeitstages, zumindest jedoch eines Großteils der Arbeitseinsätze eines Arbeitstages, durch die unbemannte landwirtschaftliche Arbeitsmaschine erfolgen kann. Dies wiederum ermöglicht einen sehr effizienten Arbeitsbetrieb, der sich durch ein Maximum an Wirtschaftlichkeit und Nachhaltigkeit auszeichnet, da vorhandene Ressourcen intelligent genutzt werden, gleichzeitig ein hoher Automatisierungsgrad erzielt und die Flexibilität bei der Abarbeitung von Arbeitseinsätzen gesteigert wird.

Das erfindungsgemäße Verfahren ermöglicht die Integration von autonom arbeitenden landwirtschaftlichen Arbeitsmaschinen in hohem Maße in bestehende landwirtschaftliche Prozesse und Strukturen, obwohl eine eigentlich hierfür notwendige Infrastruktur noch nicht vorhanden ist.

Gemäß einer vorteilhaften Weiterbildung des erfindungsgemäßen Verfahrens ist vorgesehen, dass der Energiespeicher der unbemannten landwirtschaftlichen Arbeitsmaschine von einem Energiespeicher oder einem Generator des bemannten Fahrzeugs mit Energie versorgt wird.

Ergänzend oder alternativ hierzu umfasst die unbemannte landwirtschaftliche Arbeitsmaschine zumindest einen mit dem Energiespeicher der unbemannten landwirtschaftlichen Arbeitsmaschine verbundenen Generator, der von dem bemannten Fahrzeug mechanisch angetrieben wird.

Hierdurch wird eine Vielfalt an Möglichkeiten zur Versorgung des Energiespeichers der unbemannten landwirtschaftlichen Arbeitsmaschine mit Energie geschaffen, so dass ein Laden des Energiespeichers auch dann möglich ist, wenn beispielsweise eine der Laderessourcen in anderer Weise genutzt wird, somit für einen Ladevorgang nicht zur Verfügung steht.

Gemäß einer vorteilhaften Weiterbildung des erfindungsgemäßen Verfahrens ist vorgesehen, dass der Energiespeicher der unbemannten landwirtschaftlichen Arbeitsmaschine während des Arbeitseinsatzes und/oder während einer Betriebsruhe der unbemannten landwirtschaftlichen Arbeitsmaschine in der Arbeitsphase mit Energie versorgt wird.

Durch eine Versorgung des Energiespeichers während des Arbeitseinsatzes ist es möglich den Betrieb der unbemannten landwirtschaftlichen Arbeitsmaschine während eines Arbeitstages und während der Abarbeitung des Arbeitseinsatzes/der Arbeitseinsätze ohne Unterbrechungen aufrechtzuerhalten. Falls ein unterbrechungsfreier Betrieb der unbemannten landwirtschaftlichen Arbeitsmaschine während der Abarbeitung des Arbeitseinsatzes/der Arbeitseinsätze an einem Arbeitstag nicht erforderlich ist, können auch die Zeiten, in denen die unbemannte landwirtschaftliche Arbeitsmaschine in der Arbeitsphase nicht eingesetzt wird (d.h., in ihrer Betriebsruhe), zum Laden genutzt werden, wodurch eine Anzahl an möglichen abzuarbeiten denn Arbeitseinsätzen an einem Arbeitstag durch die unbemannte landwirtschaftliche Arbeitsmaschine gesteigert werden kann.

Gemäß einer vorteilhaften Weiterbildung des erfindungsgemäßen Verfahrens ist vorgesehen, dass die unbemannte landwirtschaftliche Arbeitsmaschine elektrisch, verbrennungsmotorisch oder hybrid (d.h., eine Kombination aus elektrischem und verbrennungsmotorischem Antrieb) angetrieben wird. Die im Energiespeicher der unbemannten landwirtschaftlichen Arbeitsmaschine gespeicherte Energie wird zum Antrieb der unbemannten landwirtschaftlichen Arbeitsmaschine, zum Antrieb von Nebenverbrauchern der unbemannten landwirtschaftlichen Arbeitsmaschine und/oder zur Versorgung von Funktionseinheiten eines an die unbemannte landwirtschaftliche Arbeitsmaschine anschließbaren Anbaugerätes genutzt.

Gemäß einer vorteilhaften Weiterbildung des erfindungsgemäßen Verfahrens ist vorgesehen, dass das bemannte Fahrzeug eine landwirtschaftliche Arbeitsmaschine oder ein Shuttle-Fahrzeug ist.

Sofern das bemannte Fahrzeug eine landwirtschaftliche Arbeitsmaschine ist, ist diese vorzugsweise als Traktor ausgebildet.

Unter einem Shuttle-Fahrzeug ist im Rahmen der vorliegenden Erfindung ein Fahrzeug zu verstehen, dass vorrangig dem Zweck dient, die unbemannte landwirtschaftliche Arbeitsmaschine in der Transportphase zu überführen und gleichzeitig einem Landwirt die Möglichkeit zu eröffnen von dem Ausgangsort zur landwirtschaftlichen Fläche oder von der landwirtschaftlichen Fläche zu dem Zielort, wobei an den entsprechenden Orten weitere bemannte Fahrzeuge, insbesondere landwirtschaftliche Arbeitsmaschinen, bereitstehen können, die von dem Landwirt dort bedient werden.

Der Einsatz eines Shuttle-Fahrzeugs als bemanntes Fahrzeug schafft neben einer Versorgung in der Transportphase ferner die Möglichkeit eine temporäre Ladesäule am Ausgangsort, der landwirtschaftlichen Fläche oder am Zielort zu schaffen, so dass zeitweise und ortsgebunden Ladeinfrastruktur geschaffen werden kann.

Gemäß einer vorteilhaften Weiterbildung des erfindungsgemäßen Verfahrens ist vorgesehen, dass der Ausgangsort ein landwirtschaftlicher Betrieb oder eine weitere landwirtschaftliche Fläche ist.

Weiterhin ist der Zielort ein landwirtschaftlicher Betrieb oder eine weitere landwirtschaftliche Fläche.

Der Ausgangsort und der Zielort können einerseits durch denselben landwirtschaftlichen Betrieb oder dieselbe weitere landwirtschaftliche Fläche oder aber durch verschiedene landwirtschaftliche Betriebe oder verschiedene landwirtschaftliche Flächen definiert sein.

Gemäß einer vorteilhaften Weiterbildung des erfindungsgemäßen Verfahrens ist vorgesehen, dass ein Energiespeicher des bemannten Fahrzeugs während der Transportphase und/oder der Arbeitsphase von der unbemannten landwirtschaftlichen Arbeitsmaschine zumindest zeitweise mittelbar und/oder unmittelbar mit Energie versorgt wird.

Vorzugsweise ist vorgesehen, dass der Energiespeicher des bemannten Fahrzeugs von dem Energiespeicher oder einem Generator der unbemannten landwirtschaftlichen Arbeitsmaschine mit Energie versorgt wird.

Ergänzend oder alternativ hierzu umfasst das bemannte Fahrzeug einen Generator, der von der unbemannten landwirtschaftlichen Arbeitsmaschine mechanisch angetrieben wird.

Somit ist eine Versorgung mit Energie nicht nur unidirektional, also von bemannten Fahrzeug zur unbemannten landwirtschaftlichen Arbeitsmaschine, möglich, sondern vielmehr bidirektional.

Insbesondere im Falle eines Einsatzes von elektrisch oder hybrid angetriebenen bemannten Fahrzeugen können demnach Energiespeicher vorübergehend mit Energie versorgt werden, um eine Reichweite, eine zur Verfügung stehende Leistung und/oder eine Anzahl an durch das bemannte Fahrzeug abzuarbeitenden Arbeitseinsätzen zu erhöhen.

Gemäß einer vorteilhaften Weiterbildung des erfindungsgemäßen Verfahrens ist vorgesehen, dass das bemannte Fahrzeug an dem Ausgangsort, der landwirtschaftlichen Fläche oder dem Zielort zumindest zeitweise einen Arbeitseinsatz ausführt.

Ergänzend oder alternativ hierzu, unterstützt das bemannte Fahrzeug die unbemannte landwirtschaftliche Arbeitsmaschine bei der Ausführung ihres Arbeitseinsatzes zumindest zeitweise.

Wird ein bemanntes Fahrzeug in Form einer landwirtschaftlichen Arbeitsmaschine bereitgestellt, so kann diese aktiv in der Arbeitsphase eingesetzt werden, indem sie entweder die unbemannte landwirtschaftliche Arbeitsmaschine bei der Abarbeitung ihres Arbeitseinsatzes/ihrer Arbeitseinsätze unterstützt oder aber gleichzeitig/parallel hierzu eigene Arbeitseinsätze abarbeitet. Hierdurch wird die zuvor angesprochene Effizienz und Flexibilität im Arbeitsbetrieb bedeutend gesteigert. Unterstützend kann in diesem Zusammenhang auch bedeuten, dass Arbeitsabfolgen innerhalb eines Arbeitseinsatzes sowohl von dem bemannten Fahrzeug als auch von der unbemannten landwirtschaftlichen Arbeitsmaschine übernommen werden.

Gemäß einer vorteilhaften Weiterbildung des erfindungsgemäßen Verfahrens ist vorgesehen, dass während der Transportphase und/oder während der Arbeitsphase, insbesondere während der Ausführung des Arbeitseinsatzes, zumindest ein Anbaugerät mit der unbemannten landwirtschaftlichen Arbeitsmaschine gekoppelt ist.

Gemäß einer vorteilhaften Weiterbildung des erfindungsgemäßen Verfahrens ist vorgesehen, dass die unbemannte landwirtschaftliche Arbeitsmaschine während der Transportphase und/oder der Arbeitsphase zumindest zeitweise drahtlos mit dem bemannten Fahrzeug kommuniziert.

Hierdurch kann einerseits ein drahtloses Überführen der unbemannten landwirtschaftlichen Arbeitsmaschine ermöglicht werden andererseits auch Konzepte, wie eine sogenannte "überwachte Autonomie", realisiert werden, wobei die unbemannte landwirtschaftliche Arbeitsmaschine während eines Arbeitseinsatzes in der Arbeitsphase anhand des bemannten Fahrzeugs geführt wird.

Gemäß einer vorteilhaften Weiterbildung des erfindungsgemäßen Verfahrens ist vorgesehen, dass in der Transportphase zumindest eine weitere unbemannte landwirtschaftliche Arbeitsmaschine mittels des bemannten Fahrzeugs überführt wird.

Vorzugsweise kommuniziert die zumindest eine weitere unbemannte landwirtschaftliche Arbeitsmaschine zur/zwecks ihrer Überführung drahtlos mit dem bemannten Fahrzeug.

Weiter vorzugsweise wird die unbemannte landwirtschaftliche Arbeitsmaschine während der Ausführung ihres Arbeitseinsatzes zumindest zeitweise von der zumindest einen weiteren unbemannten landwirtschaftlichen Arbeitsmaschine unterstützt.

Durch das Überführen von weiteren unbemannten landwirtschaftlichen Arbeitsmaschinen in der Transportphase stehen in der Arbeitsphase mehrere unbemannte landwirtschaftliche Arbeitsmaschinen am Ausgangsort, der landwirtschaftlichen Fläche oder am Zielort zur Verfügung, so dass sogenannte Arbeitsgruppen zu Abarbeitung von Arbeitsfolgen innerhalb eines Arbeitseinsatzes oder zu Abarbeitung von Arbeitseinsätzen an einem Arbeitstag gebildet werden können. Hierdurch kann die Effizienz im Arbeitsbetrieb weiter gesteigert werden, da eine unterbrechungsfreie Abarbeitung von Arbeitsfolgen und Arbeitseinsätzen ermöglicht wird.

Gemäß einer vorteilhaften Weiterbildung des erfindungsgemäßen Verfahrens ist vorgesehen, dass die unbemannte landwirtschaftliche Arbeitsmaschine modular, zumindest Bodeneingriffsmittel, eine Rahmenstruktur, eine Antriebseinheit, eine Steuereinheit und den Energiespeicher umfassend, aufgebaut ist. Die Anzahl, Größe, Art und/oder Anordnung der Bodeneingriffsmittel, der Rahmenstruktur, der Antriebseinheit, der Steuereinheit und des Energiespeichers ist in Abhängigkeit des auszuführenden Arbeitseinsatzes veränderbar.

Hierdurch kann vor einem Arbeitstag oder auch am Arbeitstag selbst vor der Transportphase und/oder während der Arbeitsphase die unbemannte landwirtschaftliche Arbeitsmaschine in Abhängigkeit der geplanten abzuarbeiten Arbeitseinsätze konfiguriert werden, so dass die unbemannte landwirtschaftliche Arbeitsmaschine stets im Hinblick auf den/die von ihr auszuführenden Arbeitseinsatz/Arbeitseinsätze optimiert ist. Auch hierdurch kann die Effizienz weiter gesteigert/erhöht werden.

Die erfindungsgemäße Aufgabe wird ferner durch eine Kombination, insbesondere ein Gespann, aus unbemannter landwirtschaftlicher Arbeitsmaschine und bemanntem Fahrzeug gemäß dem unabhängigen Patentanspruch 15 gelöst.

Die vorliegende Erfindung wird nachstehend anhand der in den Figuren abgebildeten Ausführungsformen näher beschrieben.

Es zeigen:
- FIG. 1:: eine schematische und exemplarische Ansicht einer erfindungsgemäßen Kombination, insbesondere eines Gespanns, aus unbemannter landwirtschaftliche Arbeitsmaschine und bemanntem Fahrzeug; und
- FIG. 2:: eine schematische und exemplarische Ansicht einer erfindungsgemäßen Kombination, insbesondere eines Gespanns, aus unbemannter landwirtschaftlicher Arbeitsmaschine, bemanntem Fahrzeug und Anbaugerät.

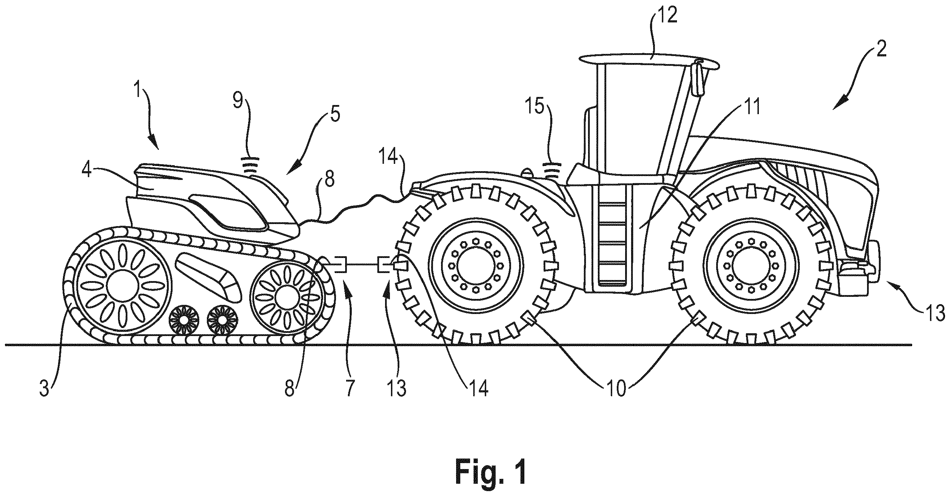

FIG. 1 zeigt eine schematische und exemplarische Darstellung einer erfindungsgemä-ßen Kombination aus unbemannter landwirtschaftlicher Arbeitsmaschine 1 und bemanntem Fahrzeug 2 anhand dessen das erfindungsgemäße Verfahren im Folgenden im Detail beschrieben wird. Insbesondere zeigt FIG. 1 ein sogenanntes Gespann aus unbemannter landwirtschaftlicher Arbeitsmaschine und bemanntem Fahrzeug, wobei beide Fahrzeuge zumindest zeitweise physisch miteinander verbunden sind. Der Begriff "Gespann" ist hierbei nicht auf eine Kombination von nicht angetriebenem Fahrzeug/Anbaugerät und angetriebenem Fahrzeug beschränkt. Vielmehr umfasst der Begriff die Kombination aus zwei angetriebenen Fahrzeugen, wobei weitere nicht angetriebene Fahrzeuge/Anbaugeräte kombiniert werden können.

Die unbemannte landwirtschaftliche Arbeitsmaschine 1 umfasst zumindest Bodeneingriffsmittel 3, eine in den FIGs. nicht dargestellte Rahmenstruktur, eine Antriebseinheit 4, eine Steuereinheit 5 sowie einen in den FIGs. nicht dargestellten Energiespeicher. Die Antriebseinheit 4 kann als elektrische, verbrennungsmotorische oder als hybride, also eine Kombination aus elektrischer und verbrennungsmotorischer, Antriebseinheit 4 ausgebildet sein. Vorzugsweise handelt es sich um eine elektrische oder eine hybride Antriebseinheit 4.

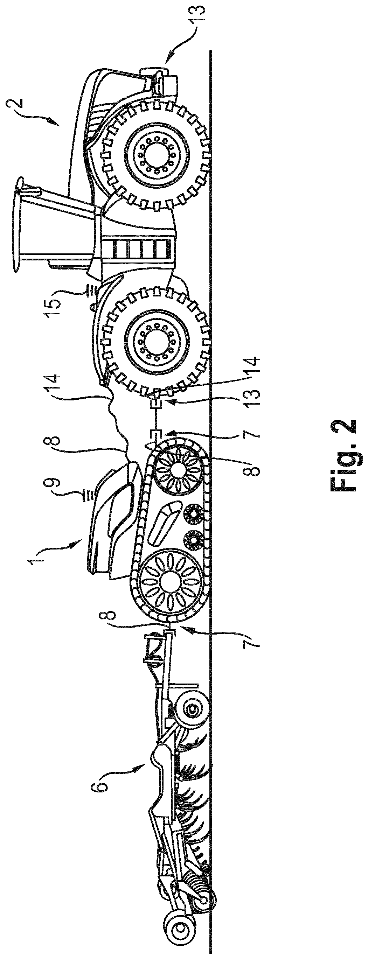

Die unbemannte landwirtschaftliche Arbeitsmaschine 1 umfasst weiterhin eine frontseitige Schnittstelle 7 und/oder eine heckseitige Schnittstelle 7 zum Kuppeln bzw. Verbinden der unbemannten landwirtschaftlichen Arbeitsmaschine 1 mit dem bemannten Fahrzeug 2, einer weiteren in den FIGs. nicht dargestellten unbemannten landwirtschaftlichen Arbeitsmaschine 1 und/oder mit einem in FIG. 2 dargestellten Anbaugerät 6. Die jeweilige Schnittstelle 7 umfasst dabei in den FIGs. nicht dargestellte Kupplungselemente zur Übertragung einer Zug- oder Schubkraft von der unbemannten landwirtschaftlichen Arbeitsmaschine 1 auf die mit dieser gekuppelten bzw. verbundenen Maschinen 1, 2 und/oder Anbaugeräte 6 oder von den gekuppelten Maschinen 1, 2 und/oder Anbaugeräten 6 auf die unbemannte landwirtschaftliche Arbeitsmaschine 1. Mittels der Kupplungselemente können formschlüssige und/oder kraftkraftschlüssige mechanische Verbindungen zwischen unbemannter landwirtschaftlicher Arbeitsmaschine 1 und der jeweiligen angekuppelten bzw. verbundenen Maschine 1, 2 und/oder dem jeweiligen Anbaugerät 6 ausgebildet werden. Beispielhaft sind hier ein Dreipunkt-Kraftheber, eine Bolzenkupplung, ein Zughaken, ein Zugpendel und/oder eine Kugelkopfkupplung zu nennen. Neben den zuvor erwähnten Kupplungselementen zur Übertragung einer Zug- oder Schubkraft sind an der unbemannten landwirtschaftlichen Arbeitsmaschine 1 im Bereich der frontseitigen und/oder heckseitigen Schnittstelle weitere Einrichtungen 8 vorgesehen, die eine Kraft- und/oder Energieübertragung in mechanischer und/oder elektrischer Form ermöglichen. Beispielhaft seien als Einrichtungen 8 Steckdosen, Stecker und/oder eine Welle, insbesondere eine Zapfwelle, genannt. Weitere in den FIGs. nicht dargestellte Einrichtungen zur Übertragung hydraulischer und/oder pneumatischer Fluide können ebenfalls vorgesehen sein. Die unbemannte landwirtschaftliche Arbeitsmaschine 1 umfasst weiterhin eine Schnittstelle 9, die es der unbemannten landwirtschaftlichen Arbeitsmaschine 1 ermöglicht drahtlos mit Maschinen, Fahrzeugen, Geräten sowie sonstigen Einrichtungen in ihrer Umgebung zu kommunizieren, Daten zu empfangen und zu übermitteln.

Das bemannte Fahrzeug 2 kann, wie in den FIGs. dargestellt, als landwirtschaftliche Arbeitsmaschine, insbesondere als Traktor, ausgebildet sein. Das bemannte Fahrzeug 2 umfasst Bodeneingriffsmittel/Räder 10, eine Rahmenstruktur 11, zumindest eine in den FIGs. nicht dargestellte Antriebseinheit und Steuereinheit, sowie eine Kabine/Fahrgastzelle 12. Auch die Antriebseinheit des bemannten Fahrzeugs 2 kann als elektrische, verbrennungsmotorische oder hybride Antriebseinheit ausgebildet sein.

Das bemannte Fahrzeug 2 umfasst zumindest eine heckseitige Schnittstelle 13 zum Kuppeln bzw. Verbinden des bemannten Fahrzeugs 2 mit der unbemannten landwirtschaftlichen Arbeitsmaschine 1 oder dem Anbaugerät 6. Entsprechend der Schnittstelle 7 der unbemannten landwirtschaftlichen Arbeitsmaschine 1 umfasst die Schnittstelle 13 des bemannten Fahrzeugs 2 nicht dargestellte Kupplungselemente zu Übertragung einer Zug- oder Schubkraft von dem bemannten Fahrzeug 2 auf die mit dieser gekuppelten bzw. verbundenen unbemannten landwirtschaftlichen Arbeitsmaschine 1 oder das Anbaugerät 6 oder von der gekuppelten bzw. verbundenen unbemannten landwirtschaftlichen Arbeitsmaschine 1 auf das bemannte Fahrzeug 2. Weiterhin umfasst die Schnittstelle ebenfalls weitere Einrichtungen 14, die die Kraft- und/oder Energieübertragung in mechanischer und/oder elektrischer Form ermöglichen. Auch hier sein beispielhaft als Einrichtungen 14 Steckdosen, Stecker und/oder eine Welle, insbesondere eine Zapfwelle, genannt. Auch können weitere Einrichtungen zu Übertragung hydraulischer und/oder pneumatischer Fluide vorgesehen sein.

Das bemannte Fahrzeug 2 umfasst weiterhin ebenfalls eine Schnittstelle 15, die es dem bemannten Fahrzeug 2 ermöglicht drahtlos mit Maschinen, Fahrzeugen, Geräten sowie sonstigen Einrichtungen in seiner Umgebung zu kommunizieren, Daten zu empfangen und zu übermitteln. Insbesondere wird durch die Schnittstelle 9 der unbemannten landwirtschaftlichen Arbeitsmaschine 1 und der Schnittstelle 15 des bemannten Fahrzeugs 2 eine drahtlose Kommunikation und Übertragung von Daten zwischen dem bemannten Fahrzeug 2 und der unbemannten landwirtschaftlichen Arbeitsmaschine 1 ermöglicht. Neben der heckseitigen Schnittstelle 13 kann das bemannte Fahrzeug 2 eine weitere frontseitige Schnittstelle 13 umfassen, die entsprechend der heckseitigen Schnittstelle 13 des bemannten Fahrzeugs 2 ausgestaltet ist und dem Kuppeln bzw. Verbinden des bemannten Fahrzeugs 2 mit der oder einer weiteren unbemannten landwirtschaftlichen Arbeitsmaschine 1 oder dem oder einem weiteren Anbaugerät 6 dient.

Ganz allgemein kann der Betrieb einer landwirtschaftlichen Arbeitsmaschine, unabhängig davon, ob diese nun unbemannt oder bemannt ist, zumindest in zwei Phasen unterteilt werden. Eine dieser Phasen bezeichnet einen Zeitraum, in dem die landwirtschaftliche Arbeitsmaschine von einem Ausgangsort zu einer landwirtschaftlichen Fläche oder von einer landwirtschaftlichen Fläche zu einem Zielort überführt wird. Die zweite dieser Phasen bezeichnet einen Zeitraum, in dem die landwirtschaftliche Arbeitsmaschine an dem Ausgangsort, an der landwirtschaftlichen Fläche oder an dem Zielort zumindest zeitweise einen Arbeitseinsatz durchführt. Diese zweite Phase kann auch eine sogenannte Betriebsruhe umfassen, wobei als Betriebsruhe ein Zeitraum, der zwischen verschiedenen abzuarbeiten Arbeitseinsätzen liegt, oder aber als eine Unterbrechung innerhalb eines Arbeitseinsatzes definiert ist.

Im Rahmen der vorliegenden Erfindung wird die erste Phase als Transportphase definiert, wobei hier die unbemannte landwirtschaftliche Arbeitsmaschine 1 mittels des bemannten Fahrzeugs 2 von einem Ausgangsort zu einer zu bearbeitenden landwirtschaftlichen Fläche oder von der landwirtschaftlichen Fläche zu einem Zielort überführt wird. Die zweite Phase ist als Arbeitsphase definiert, wobei sich während dieser Phase sowohl die unbemannte landwirtschaftliche Arbeitsmaschine 1 als auch das bemannte Fahrzeug 2 an dem Ausgangsort, der landwirtschaftlichen Fläche oder dem Zielort befinden und zumindest die unbemannte landwirtschaftlicher Arbeitsmaschine 1 dort zumindest zeitweise einen Arbeitseinsatz ausführt.

Die Nutzung eines bemannten Fahrzeugs 2 zur Überführung der unbemannten landwirtschaftlichen Arbeitsmaschine 1 und die daraus resultierende Tatsache, dass sich sowohl das bemannte Fahrzeug 2 als auch die unbemannte landwirtschaftliche Arbeitsmaschine 1 am Ausgangsort, der landwirtschaftlichen Fläche oder am Zielort befinden, erlaubt es, die unbemannte landwirtschaftliche Arbeitsmaschine 1 zumindest zeitweise während dieser Phasen mit Energie zu versorgen, um den in den FIGs. nicht dargestellten Energiespeicher der unbemannten landwirtschaftlichen Arbeitsmaschine 1 zu laden. Hierzu werden die unbemannte langwirtschaftliche Arbeitsmaschine 1 und das bemannte Fahrzeug 2 mittels ihrer Einrichtungen 8, 14, die jeweils Teil der jeweiligen Schnittstellen 7, 13 sind, miteinander physisch verbunden. Die Versorgung des Energiespeichers der unbemannten landwirtschaftlichen Arbeitsmaschine 1 mit Energie kann durch das bemannte Fahrzeug 2 mittelbar und/oder unmittelbar erfolgen.

Unmittelbar bedeutet in diesem Zusammenhang beispielsweise, dass der Energiespeicher der unbemannten landwirtschaftlichen Arbeitsmaschine 1 von einem in den FIGs. nicht dargestellten Energiespeicher oder einem Generator des bemannten Fahrzeugs 2 mit Energie versorgt wird. Hierzu wird eine elektrische Kopplung bzw. Verbindung der Einrichtungen 8, 14, beispielsweise über ein Kabel, ausgebildet, wodurch der Energiespeicher der unbemannten landwirtschaftlichen Arbeitsmaschine 1 direkt von dem Energiespeicher oder dem Generator des bemannten Fahrzeugs 2 mit Energie versorgt wird.

Mittelbar bedeutet in diesem Zusammenhang beispielsweise, dass die unbemannte landwirtschaftliche Arbeitsmaschine 1 zumindest einen in den FIGs. nicht dargestellten mit dem Energiespeicher der unbemannten landwirtschaftlichen Arbeitsmaschine 1 verbundenen Generator umfasst, der von dem bemannten Fahrzeug 2 mechanisch angetrieben wird. Hierzu wird eine mechanische Kopplung bzw. Verbindung der Einrichtungen 8, 14, beispielsweise über eine Kopplung bzw. Verbindung von Wellen, insbesondere den Zapfwellen, miteinander, ausgebildet, wodurch der zumindest eine Generator der unbemannten landwirtschaftlichen Arbeitsmaschine 1 angetrieben und dem Energiespeicher der unbemannten landwirtschaftlichen Arbeitsmaschine 1 Energie zugeführt wird.

Zumindest zeitweise bedeutet in diesem Zusammenhang, dass die physische Kopplung bzw. Verbindung von unbemannter landwirtschaftlicher Arbeitsmaschine 1 und bemanntem Fahrzeug 2 nicht während der gesamten Transportphase und/oder Arbeitsphase erfolgen muss, sondern auch nur zeitweilig erfolgen kann.

Wichtig ist zu erwähnen, dass die physische Kopplung bzw. Verbindung zur Versorgung des Energiespeichers der unbemannten landwirtschaftlichen Arbeitsmaschine 1 nicht bedeutet, dass auch Zug- oder der Schubkräfte hierüber übertragen werden. Vielmehr kann die unbemannte landwirtschaftliche Arbeitsmaschine 1 wahlweise in der Transportphase entweder durch eine Verbindung der Kupplungselemente miteinander von dem bemannten Fahrzeug 2 geschleppt oder durch eine drahtlose Kommunikation der unbemannten landwirtschaftlichen Arbeitsmaschine 1 mit dem bemannten Fahrzeug 2 überführt werden.

In der Arbeitsphase kann eine Versorgung des Energiespeichers der unbemannten landwirtschaftlichen Arbeitsmaschine 1 mit Energie sowohl während eines Arbeitseinsatzes als auch während einer Betriebsruhe erfolgen.

Die in dem Energiespeicher der unbemannten landwirtschaftlichen Arbeitsmaschine 1 gespeicherte Energie kann je nach Ausgestaltung der Antriebseinheit 4 der unbemannten landwirtschaftlichen Arbeitsmaschine 1 zum Antrieb derselben und/oder zum Antrieb von Nebenverbrauchern derselben genutzt werden. Da auch die Möglichkeit besteht, dass während der Transportphase und/oder während der Arbeitsphase der unbemannten landwirtschaftlichen Arbeitsmaschine 1, insbesondere während eines Arbeitseinsatzes in der Arbeitsphase, ein Anbaugerätes 6 an die unbemannte langwirtschaftliche Arbeitsmaschine 1 gekoppelt ist, kann die in dem Energiespeicher der unbemannten landwirtschaftlichen Arbeitsmaschine 1 gespeicherte Energie auch zur Versorgung von Funktionseinheiten des Anbaugerätes 6 genutzt werden.

Weiterhin ist es möglich, dass der in den FIGs. nicht dargestellte Energiespeicher des bemannten Fahrzeugs 2 während der Transportphase und/oder der Arbeitsphase von der unbemannten landwirtschaftlichen Arbeitsmaschine 1 zumindest zeitweise mittelbar und/oder unmittelbar mit Energie versorgt wird.

Unmittelbar bedeutet in diesem Zusammenhang beispielsweise, dass der Energiespeicher des bemannten Fahrzeugs 2 von dem Energiespeicher oder dem Generator der unbemannten landwirtschaftlichen Arbeitsmaschine 1 mit Energie versorgt wird. Hierzu wird entsprechend eine elektrische Kopplung bzw. Verbindung der Einrichtungen 8, 14, beispielsweise über ein Kabel, ausgebildet, wodurch der Energiespeicher des bemannten Fahrzeugs 2 direkt von dem Energiespeicher oder dem Generator der unbemannten landwirtschaftlichen Arbeitsmaschine 1 mit Energie versorgt wird.

Mittelbar bedeutet in diesem Zusammenhang beispielsweise, dass der Generator des bemannten Fahrzeugs 2 von der unbemannten landwirtschaftlichen Arbeitsmaschine 1 mechanisch angetrieben wird. Hierzu wird entsprechend eine mechanische Kopplung bzw. Verbindung der Einrichtungen 8, 14, beispielsweise über eine Kopplung von Wellen, insbesondere der Zapfwellen, miteinander, ausgebildet, wodurch der Generator des bemannten Fahrzeugs 2 angetrieben wird und dem Energiespeicher Energie zugeführt wird.

Dadurch, dass die unbemannte langwirtschaftliche Arbeitsmaschine 1 und das bemannte Fahrzeug 2 sowohl über die Schnittstellen 7, 13 zur Übertragung von Zug- oder Schubkräften miteinander gekoppelt werden können als auch drahtlos über die Schnittstellen 9, 15 ergeben sich weiterhin eine Vielzahl von Einsatzmöglichkeiten während eines Arbeitseinsatzes.

So ist es beispielsweise möglich die unbemannte landwirtschaftliche Arbeitsmaschine 1 und ein als Traktor ausgeführtes bemanntes Fahrzeug 2 miteinander über die Schnittstellen 7, 13 zu koppeln, um somit die Traktion und/oder Leistung während eines Arbeitseinsatzes zu erhöhen, ohne dass ein Bodendruck wesentlich erhöht wird.

Durch eine drahtlose Kopplung der unbemannten landwirtschaftliche Arbeitsmaschine 1 und eines als landwirtschaftliche Arbeitsmaschine ausgeführten bemannten Fahrzeugs 2 kann beispielsweise ein Betrieb der unbemannten landwirtschaftlichen Arbeitsmaschine 1 realisiert werden, der auch als "überwachte Autonomie" bezeichnet wird, wobei die unbemannte landwirtschaftlicher Arbeitsmaschine im Wesentlichen autonom ihren Arbeitseinsatz ausführt, sich jedoch anhand der bemannten landwirtschaftlichen Arbeitsmaschine hierbei orientiert.

Ebenfalls ist ein vollautonomer Betrieb der unbemannten landwirtschaftlichen Arbeitsmaschine 1 möglich, indem die unbemannte landwirtschaftliche Arbeitsmaschine 1 mittels ihrer Schnittstelle 9 GPS-Daten empfängt und diese gemeinsam mit vorhandenen Sensordaten und/oder Bestandsdaten in ihrer Steuereinheit derart verarbeitet, dass ein Arbeitseinsatz von ihr ausgeführt wird ohne, dass eine Person oder ein bemanntes Fahrzeug hierbei involviert ist.

Durch die verschiedenen Möglichkeiten der Kopplung bzw. Verbindung der unbemannten landwirtschaftlichen Arbeitsmaschine 1 und des bemannten Fahrzeugs 2 können demnach Arbeitseinsätze gemeinsam oder aber verschiedene Arbeitseinsätze gleichzeitig abgearbeitet werden.

Wie eingangs schon angedeutet, ist es möglich, nicht nur eine unbemannte landwirtschaftliche Arbeitsmaschine 1 mit einem bemannten Fahrzeug 2 zu koppeln. Vielmehr können mehrere unbemannte landwirtschaftliche Arbeitsmaschinen 1 mit einem oder auch mehreren bemannten Fahrzeugen 2 gekoppelt werden, so dass diese gemeinschaftlich in der Transportphase überführt werden oder aber gemeinschaftlich einen oder mehrere Arbeitseinsätze in der Arbeitsphase ausführen. Hierdurch können sogenannte Arbeitsgruppen in der Arbeitsphase gebildet werden, wodurch Arbeitsabfolgen in einem Arbeitseinsatz aufgeteilt abgearbeitet werden oder aber verschiedene aufeinander aufbauende Arbeitseinsätze ohne Unterbrechung durchgeführt werden können.

Die Kopplung bzw. Verbindung zumindest einer weiteren unbemannten landwirtschaftlichen Arbeitsmaschine 1 mit der einen unbemannten landwirtschaftlichen Arbeitsmaschine 1 oder dem bemannten Fahrzeug 2 kann entsprechend ebenfalls mechanisch oder drahtlos erfolgen.

Das bemannte Fahrzeug 2 muss nicht zwangsläufig als landwirtschaftliche Arbeitsmaschine ausgebildet sein, sondern kann auch als Shuttlefahrzeug ausgebildet sein. Ein Shuttle-Fahrzeug stellt ein Fahrzeug dar, dass vorrangig dem Zweck dient die unbemannte landwirtschaftliche Arbeitsmaschine 1 in der Transportphase zu überführen und gleichzeitig einem Landwirt/Bediener die Möglichkeit zu eröffnen von dem Ausgangsort zur landwirtschaftlichen Fläche oder von der landwirtschaftlichen Fläche zu dem Zielort zu gelangen, wobei an den entsprechenden Orten weitere bemannte Fahrzeuge 2, insbesondere landwirtschaftliche Arbeitsmaschinen, bereitstehen können, die von dem Landwirt/Bediener dort betrieben werden. Das Shuttle-Fahrzeug verfügt ebenfalls zumindest über die zuvor beschriebene heckseitige Schnittstelle 13.

Im Rahmen der vorliegenden Erfindung kann der Ausgangsort ein landwirtschaftlicher Betrieb oder eine weitere landwirtschaftliche Fläche sein. Für den Zielort gilt ebenfalls, dass dieser ein landwirtschaftlicher Betrieb oder eine weitere landwirtschaftliche Fläche sein kann. Der Ausgangsort und der Zielort können dabei einerseits durch denselben landwirtschaftlichen Betrieb oder dieselbe weitere landwirtschaftliche Fläche oder aber durch verschiedene landwirtschaftliche Betriebe oder verschiedene landwirtschaftliche Flächen definiert sein.

Vorteilhafterweise ist die unbemannte landwirtschaftliche Arbeitsmaschine 1 modular aufgebaut. Dies bedeutet, dass die Anzahl, Größe, Art und/oder Anordnung der Bodeneingriffsmittel 3, der Rahmenstruktur, der Antriebseinheit 4, der Steuereinheit 5 und des Energiespeichers in Abhängigkeit des auszuführenden Arbeitseinsatzes veränderbar ist. Je nach auszuführenden Arbeitseinsätzen an einem Arbeitstag kann die unbemannte landwirtschaftliche Arbeitsmaschine 1 somit möglichst optimal im Hinblick auf eine möglichst effiziente Erledigung der Arbeitseinsätze aufgebaut werden.

Insbesondere ist es möglich, dass die unbemannte landwirtschaftliche Arbeitsmaschine nicht nur einen Energiespeicher umfasst, sondern zwei oder mehr Energiespeicher, die, vorzugsweise wahlweise, mit Energie von dem bemannten Fahrzeug 2 versorgt werden können.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: unbemannte landwirtschaftliche Arbeitsmaschine
- 2: bemanntes Fahrzeug
- 3: Bodeneingriffsmittel
- 4: Antriebseinheit
- 5: Steuereinheit
- 6: Anbaugerät
- 7: Schnittstelle zum Koppeln bzw. Verbinden
- 8: Einrichtung zur Kraft- und/oder Energieübertragung
- 9: Schnittstelle zur drahtlosen Kommunikation
- 10: Bodeneingriffsmittel
- 11: Rahmenstruktur
- 12: Kabine bzw. Fahrgastzelle
- 13: Schnittstelle zum Koppeln bzw. Verbinden
- 14: Einrichtung zur Kraft- und/oder Energieübertragung
- 15: Schnittstelle zur drahtlosen Kommunikation

## Patentansprüche

1. Verfahren zur Versorgung eines Energiespeichers einer unbemannten landwirtschaftlichen Arbeitsmaschine (1) mittels eines bemannten Fahrzeugs (2), wobei das Verfahren Folgendes umfasst:
- eine Transportphase, während der die unbemannte landwirtschaftliche Arbeitsmaschine (1) mittels des bemannten Fahrzeugs (2) von einem Ausgangsort zu einer zu bearbeitenden landwirtschaftlichen Fläche oder von der landwirtschaftlichen Fläche zu einem Zielort überführt wird; und/oder
- eine Arbeitsphase, während der sich sowohl die unbemannte landwirtschaftliche Arbeitsmaschine (1) als auch das bemannte Fahrzeug (2) an dem Ausgangsort, der landwirtschaftlichen Fläche oder dem Zielort befinden und zumindest die unbemannte landwirtschaftliche Arbeitsmaschine (1) dort zumindest zeitweise einen Arbeitseinsatz ausführt,
**dadurch gekennzeichnet, dass**
die unbemannte landwirtschaftliche Arbeitsmaschine (1) zumindest zeitweise während der Transportphase und/oder der Arbeitsphase mit dem bemannten Fahrzeug (2) physisch verbunden ist und zwar derart, dass der Energiespeicher der unbemannten landwirtschaftlichen Arbeitsmaschine (1) von dem bemannten Fahrzeug (2) zumindest zeitweise mittelbar und/oder unmittelbar mit Energie versorgt wird.

2. Verfahren nach Anspruch 1, **dadurch gekennzeichnet, dass** der Energiespeicher der unbemannten landwirtschaftlichen Arbeitsmaschine (1) von einem Energiespeicher oder einem Generator des bemannten Fahrzeugs (2) mit Energie versorgt wird; und/oder
die unbemannte landwirtschaftliche Arbeitsmaschine (1) zumindest einen mit dem Energiespeicher der unbemannten landwirtschaftlichen Arbeitsmaschine (1) verbundenen Generator umfasst, der von dem bemannten Fahrzeug (2) mechanisch angetrieben wird.

3. Verfahren nach Anspruch 1 oder 2, **dadurch gekennzeichnet, dass** der Energiespeicher der unbemannten landwirtschaftlichen Arbeitsmaschine (1) während des Arbeitseinsatzes und/oder während einer Betriebsruhe der unbemannten landwirtschaftlichen Arbeitsmaschine (1) in der Arbeitsphase mit Energie versorgt wird.

4. Verfahren nach einem der Ansprüche 1 bis 3, **dadurch gekennzeichnet, dass** die unbemannte landwirtschaftliche Arbeitsmaschine (1) elektrisch, verbrennungsmotorisch oder hybrid angetrieben wird, wobei die im Energiespeicher der unbemannten landwirtschaftlichen Arbeitsmaschine (1) gespeicherte Energie zum Antrieb der unbemannten landwirtschaftlichen Arbeitsmaschine (1), zum Antrieb von Nebenverbrauchern der unbemannten landwirtschaftlichen Arbeitsmaschine (1) und/oder zur Versorgung von Funktionseinheiten eines an die unbemannte landwirtschaftliche Arbeitsmaschine (1) anschließbaren Anbaugerätes (6) genutzt wird.

5. Verfahren nach einem der Ansprüche 1 bis 4, **dadurch gekennzeichnet, dass** das bemannte Fahrzeug (2) eine landwirtschaftliche Arbeitsmaschine, insbesondere ein Traktor, oder ein Shuttle-Fahrzeug ist.

6. Verfahren nach einem der Ansprüche 1 bis 5, **dadurch gekennzeichnet, dass** der Ausgangsort ein landwirtschaftlicher Betrieb oder eine weitere landwirtschaftliche Fläche ist; und
der Zielort ein landwirtschaftlicher Betrieb oder eine weitere landwirtschaftliche Fläche ist.

7. Verfahren nach einem der Ansprüche 1 bis 6, **dadurch gekennzeichnet, dass** ein Energiespeicher des bemannten Fahrzeugs (2) während der Transportphase und/oder der Arbeitsphase von der unbemannten landwirtschaftlichen Arbeitsmaschine (1) zumindest zeitweise mittelbar und/oder unmittelbar mit Energie versorgt wird.

8. Verfahren nach Anspruch 7, **dadurch gekennzeichnet, dass** der Energiespeicher des bemannten Fahrzeugs (2) von dem Energiespeicher oder einem Generator der unbemannten landwirtschaftlichen Arbeitsmaschine (1) mit Energie versorgt wird; und/oder
das bemannte Fahrzeug (2) einen Generator umfasst, der von der unbemannten landwirtschaftlichen Arbeitsmaschine (1) mechanisch angetrieben wird.

9. Verfahren nach einem der Ansprüche 1 bis 8, **dadurch gekennzeichnet, dass** das bemannte Fahrzeug (2) an dem Ausgangsort, der landwirtschaftlichen Fläche oder dem Zielort zumindest zeitweise einen Arbeitseinsatz ausführt; und/oder
das bemannte Fahrzeug (2) die unbemannte landwirtschaftliche Arbeitsmaschine (1) bei der Ausführung ihres Arbeitseinsatzes zumindest zeitweise unterstützt.

10. Verfahren nach einem der Ansprüche 1 bis 9, **dadurch gekennzeichnet, dass** während der Transportphase und/oder während der Arbeitsphase, insbesondere während der Ausführung des Arbeitseinsatzes, zumindest ein Anbaugerät (6) mit der unbemannten landwirtschaftlichen Arbeitsmaschine (1) gekoppelt ist.

11. Verfahren nach einem der Ansprüche 1 bis 10, **dadurch gekennzeichnet, dass** die unbemannte landwirtschaftliche Arbeitsmaschine (1) während der Transportphase und/oder der Arbeitsphase zumindest zeitweise drahtlos mit dem bemannten Fahrzeug (2) kommuniziert.

12. Verfahren nach einem der Ansprüche 1 bis 11, **dadurch gekennzeichnet, dass** in der Transportphase zumindest eine weitere unbemannte landwirtschaftliche Arbeitsmaschine (1) mittels des bemannten Fahrzeugs (2) überführt wird, wobei die zumindest eine weitere unbemannte landwirtschaftliche Arbeitsmaschine (1) zur Überführung vorzugsweise drahtlos mit dem bemannten Fahrzeug (2) kommuniziert.

13. Verfahren nach Anspruch 12, **dadurch gekennzeichnet, dass** die unbemannte landwirtschaftliche Arbeitsmaschine (1) während der Ausführung ihres Arbeitseinsatzes zumindest zeitweise von der zumindest einen weiteren unbemannten landwirtschaftlichen Arbeitsmaschine (1) unterstützt wird.

14. Verfahren nach einem der Ansprüche 1 bis 13, **dadurch gekennzeichnet, dass** die unbemannte landwirtschaftliche Arbeitsmaschine (1) modular, zumindest Bodeneingriffsmittel (3), eine Rahmenstruktur, eine Antriebseinheit (4), eine Steuereinheit (5) und den Energiespeicher umfassend, aufgebaut ist, wobei die Anzahl, Größe, Art und/oder Anordnung der Bodeneingriffsmittel (3), der Rahmenstruktur, der Antriebseinheit (4), der Steuereinheit (5) und des Energiespeichers in Abhängigkeit des auszuführenden Arbeitseinsatzes veränderbar ist.

15. Kombination, insbesondere Gespann, aus unbemannter landwirtschaftlicher Arbeitsmaschine (1) und bemanntem Fahrzeug (2) zur Verwendung in einem Verfahren nach einem der Ansprüche 1 bis 14.
